Europäisches Patentamt

European Patent Office

Office européen des brevets

(19)

⑪ · Veröffentlichungsnummer: **0 082 323**
**B1**

(12)

# EUROPÄISCHE PATENTSCHRIFT

(45) Veröffentlichungstag der Patentschrift:
10.07.85

(21) Anmeldenummer: 82110759.6

(22) Anmeldetag: 22.11.82

(51) Int. Cl.⁴: **B 60 R 25/02**

(54) **Lenkschloss für ein Kraftfahrzeug.**

**Verbunden mit 82903314.1/0096040 (europäische Anmeldenummer/Veröffentlichungsnummer) durch Entscheidung vom 09.10.84.**

(30) Priorität: 21.12.81 DE 3150608

(43) Veröffentlichungstag der Anmeldung:
29.06.83 Patentblatt 83/26

(45) Bekanntmachung des Hinweises auf die Patenterteilung:
10.07.85 Patentblatt 85/28

(84) Benannte Vertragsstaaten:
AT CH DE FR GB IT LI LU NL SE

(56) Entgegenhaltungen:
DE - B - 1 204 091
GB - A - 1 038 233

(73) Patentinhaber: NEIMAN S.A., 39, Avenue Marceau,
F-92400 Courbevole (FR)

(72) Erfinder: Weber, Günter, Bergerheide 54,
D-5600 Wuppertal 1 (DE)

(74) Vertreter: Patentanwaltsbüro Cohausz & Florack,
Postfach 14 01 47, D-4000 Düsseldorf 1 (DE)

BUNDESDRUCKEREI BERLIN

**Beschreibung**

Die Erfindung betrifft ein Lenkschloß für ein Kraftfahrzeug, mit einem längsverschieblichen Sperriegel, der einen ersten, die Lenksäule sperrenden Teil und einen zweiten, vom Schließzylinder insbesondere über eine Schaltwalze betätigten Teil aufweist, wobei beide zueinander koaxial angeordnete Sperriegelteile gegeneinander begrenzt axial verschieblich sind und durch eine Feder voneinander weg belastet sind. Ein derartiges Lenkschloß ist beispielsweise in DE-B-1 204 091 beschrieben und dargestellt.

Damit ein Lenkschloß auch dann in die Schließstellung gebracht werden kann, wenn die Ausnehmung in der auf der Lenksäule aufgebrachten Buchse nicht mit dem Sperriegel fluchtet, ist der Sperriegel bei bekannten Schlössern zweiteilig ausgeführt, die gegeneinander federbelastet sind, um den Teil, durch den die Lenksäule sperrbar ist, so lange auf der Buchsenaußenseite aufliegen zu lassen, bis die Ausnehmung durch Drehen des Lenkrades erreicht ist und dann der Sperriegel in diese Ausnehmung einfällt. Der rahmenförmige zweite Teil des Sperriegels ist bekannterweise von einer Verlängerung des Schließzylinders (Schaltwalze) durchdrungen, um den Sperriegel zu betätigen. Dieser rahmenförmige Teil wurde aus Zinkdruckguß hergestellt und weist stets Lufteinschlüsse (Lunker) auf, die in nicht berechenbarer Weise das Material an unterschiedlichen und wechselnden Stellen schwächen, so daß mit hoher Sicherheit Ausfälle nicht ausgeschlossen werden können.

Aufgabe der Erfindung ist es, ein Lenkschloß der eingangs genannten Art derart zu verbessern, daß der vom Schließzylinder betätigte Teil des Sperriegels einfach herstellbar und leicht zu montieren ist und eine hohe Sicherheit gegen Ausfälle, insbesondere Bruch, besitzt.

Diese Aufgabe wird erfindungsgemäß dadurch gelöst, daß der zweite Sperriegelteil mindestens zwei gleiche, flache, mit ihren Flachseiten aufeinandergelegte Blechteile aufweist, die durch ein Kunststoffteil aneinandergehalten sind.

Ein aus zwei oder mehr Blechteilen hergestellter Sperriegel besitzt aufgrund des gewalzten Materials, insbesondere Stahl, eine hohe und gleichmäßige Festigkeit. Blechteile lassen sich durch Stanzen leicht herstellen und durch das Kunststoffteil sicher aneinander halten, ohne die Blechteile durch einen zusätzlichen Arbeitsvorgang aneinander, z. B. durch Nieten, befestigen zu müssen.

Aus der DE-B-1 204 091 ist es zwar bekannt, einen Sperriegel aus mehreren Blechteilen herzustellen, aber diese sind aneinandergenietet. Die Blechteile weisen zudem Ausnehmungen auf, deren Formgebung mindestens teilweise voneinander abweicht.

Vorzugsweise wird vorgeschlagen, daß der zweite Sperriegelteil und damit die Blechteile eine Öffnung aufweisen, in die das Kunststoffteil eingesetzt ist. Dabei kann das Kunststoffteil in der Öffnung an deren Rand verrastet einliegen.

Eine besonders sichere Befestigung der Blechteile aneinander und des Kunststoffteils an den Blechteilen wird dadurch geschaffen, daß das Kunststoffteil einen Randbereich der Öffnung auf beiden äußeren Flachseiten des zweiten Sperriegelteils übergreift. Ferner wird hierzu vorgeschlagen, daß das Kunststoffteil eine die Blechteile übergreifende Nut mit einer Innenweite aufweist, die etwa die Gesamtdicke der aufeinandergelegten Blechteile ist. Auch kann hierfür die Nut auf drei Seiten des Kunststoffteils umlaufen.

Vorzugsweise wird vorgeschlagen, daß die Öffnung für das Kunststoffteil einen Einschiebebereich bildet, dessen einander gegenüberliegenden, zueinander etwa parallelen Ränder voneinander einen Abstand haben, der etwa dem Abstand der Nutenböden zweier zueinander etwa paralleler Nutenbereiche des Kunststoffteils entspricht. Hierdurch ist eine einfache und sichere Befestigung gegeben. Hierbei kann ein einrastender bzw. klipsender Halt des Kunststoffteils dadurch gegeben sein, daß in dem Endabschnitt des Einschiebebereichs, in dem das Kunststoffteil seine halternde Lage hat, die einander gegenüberliegenden Ränder einen Abstand aufweisen, der gleich oder etwas größer ist als der Abstand der Nutenböden voneinander, und daß in einem davor liegenden Abschnitt (Einführabschnitt) des Einschiebebereichs der Abstand der Ränder voneinander kleiner ist als der Abstand der Nutenböden voneinander. Dieser Halt bzw. diese Verbindung wird gesichert und insbesondere unlösbar, wenn zwischen dem Endabschnitt und dem davor liegenden Abschnitt mindestens einer der beiden Ränder eine Stufe bildet, hinter der das Kunststoffteil einrastet.

Um zu gewährleisten, daß das Kunststoffteil stets in derselben Lage eingesetzt wird, wird vorgeschlagen, daß der Rand der Öffnung eine zur Längsachse des Sperriegels unsymmetrische Ausnehmung, insbesondere einen Rücksprung, aufweist, in der ein entsprechend geformter Vorsprung des Kunststoffteils einliegt.

Um das Kunststoffteil durch den übrigen Bereich der Öffnung in den Einschiebebereich einbringen zu können, wird vorgeschlagen, daß die Breite des Einschiebebereichs geringer ist als die Breite oder der Durchmesser der übrigen Öffnung. Hiermit weist dann der übrige Bereich der Öffnung größere Abmessungen auf als das Kunststoffteil.

Eine Befestigung der Blechteile aneinander in etwa einem mittleren Bereich des zweiten Teils kann dadurch erreicht werden, wenn das Kunststoffteil und insbesondere der Einschiebebereich der Öffnung nahe dem ersten Teil liegen.

Das Kunststoffteil kann über den Halt der Blechteile aneinander weitere Funktionen übernehmen. So wird vorgeschlagen, daß am Kunststoffteil eine Anlagefläche für eine den Sperriegel beaufschlagende Feder angeformt ist. Ferner kann am Kunststoffteil ein Vorsprung, insbesondere ein Kurventeil oder Nocken angeformt sein, durch den ein Schalter betätigbar ist. Ein solcher Schalter kann eine Warneinrichtung, insbesondere einen Summer im Kraftfahrzeug ertönen lassen, wenn vor dem Öffnen einer Tür vergessen wurde, den Schlüssel abzuziehen. Die Anordnung am Kunststoffteil ist dabei besonders vorteilhaft, da das zweite, vom Schließzylinder betätigte Teil des Sperriegels, und damit auch das Kunststoffteil, sich auch dann in der sperrenden Lage befinden, wenn das erste Teil des Sperriegels noch nicht in die Ausnehmung der Lenksäule eingerastet ist. Dabei zeigt das Kunststoffteil noch die zusätzlichen Vorteile, daß es für die einrastende Halterung nicht nur elastisch ist, sondern auch gute Gleiteigenschaften aufweist und elektrisch isoliert.

Vorzugsweise wird vorgeschlagen, daß die Öffnung zusätzlich zum Kunststoffteil die Schaltwalze aufnimmt. Auch können die Flachseiten der Blechteile rechtwinklig zur Drehachse des Schließzylinders sein.

Herstellung und Montage werden dadurch erleichtert, daß die den Sperriegel aufnehmende, quer zur Schließzylinderachse liegende Gehäuseausnehmung auf der der Lenksäule gegenüberliegenden Seite durch ein Verschlußstück, insbesondere Deckel, verschlossen ist, an dessen Innenseite ein Vorsprung angeformt ist, der eine Öffnung aufweist, die von der mit dem Zylinderkern verbundenen Schaltwalze durchdrungen ist. Dabei kann der Vorsprung eine Blattfeder tragen, die durch den den Sperriegel betätigenden Steuernocken der Schaltwalze betätigbar ist und die in der Schlüsselabzugsstellung an einer Fläche des zweiten Sperriegelteils sperrend anliegt, um eine Bewegung des zweiten Sperriegelteils aus der Sperrstellung zu verhindern.

Ein Ausführungsbeispiel der Erfindung ist in den Zeichnungen dargestellt und wird im folgenden näher beschrieben. Es zeigt

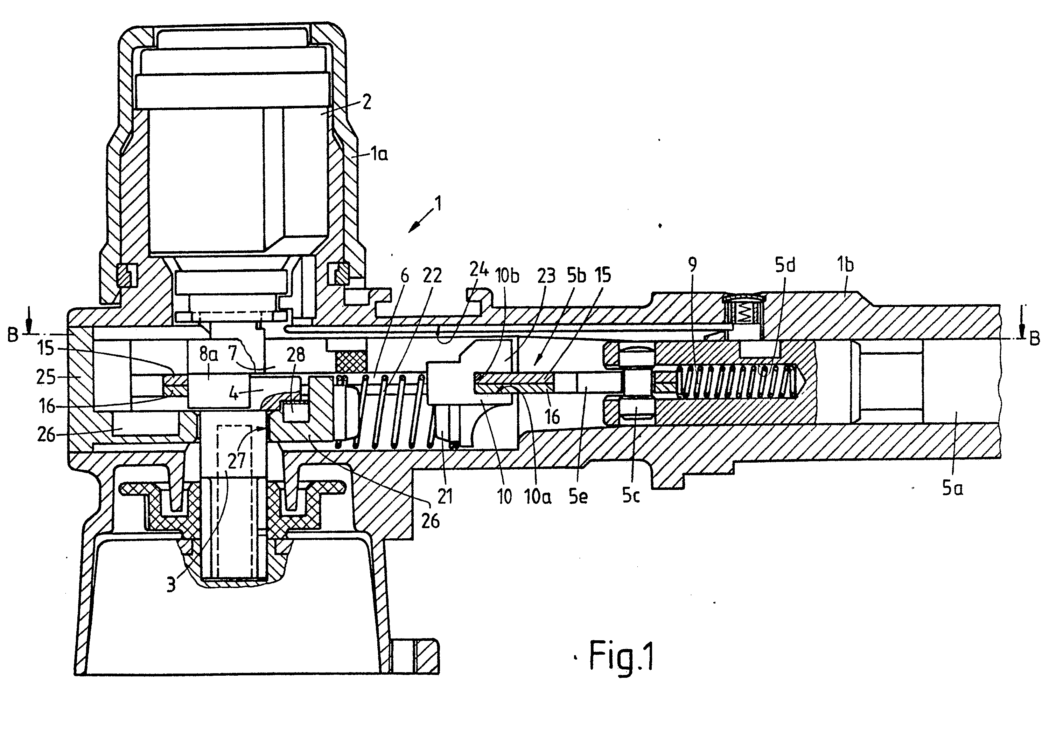

Fig. 1 einen Schnitt durch das Lenkschloß;

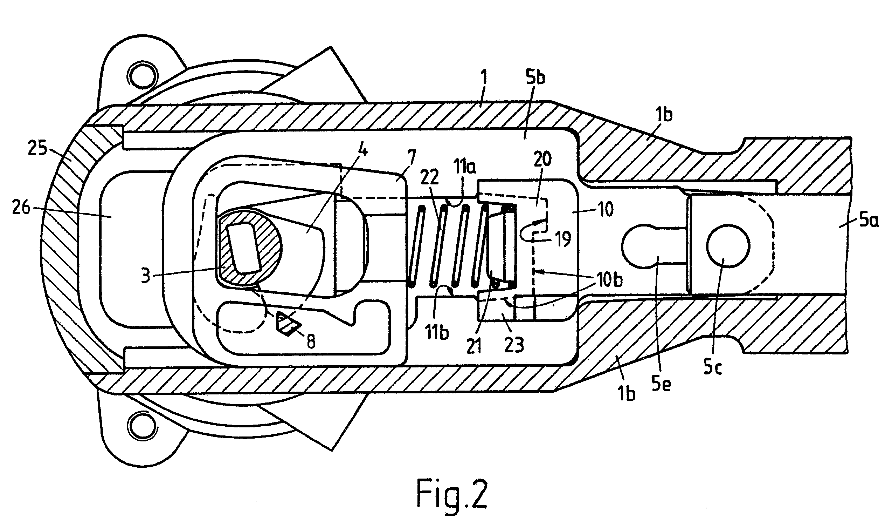

Fig. 2 einen Schnitt nach B-B in Fig. 1;

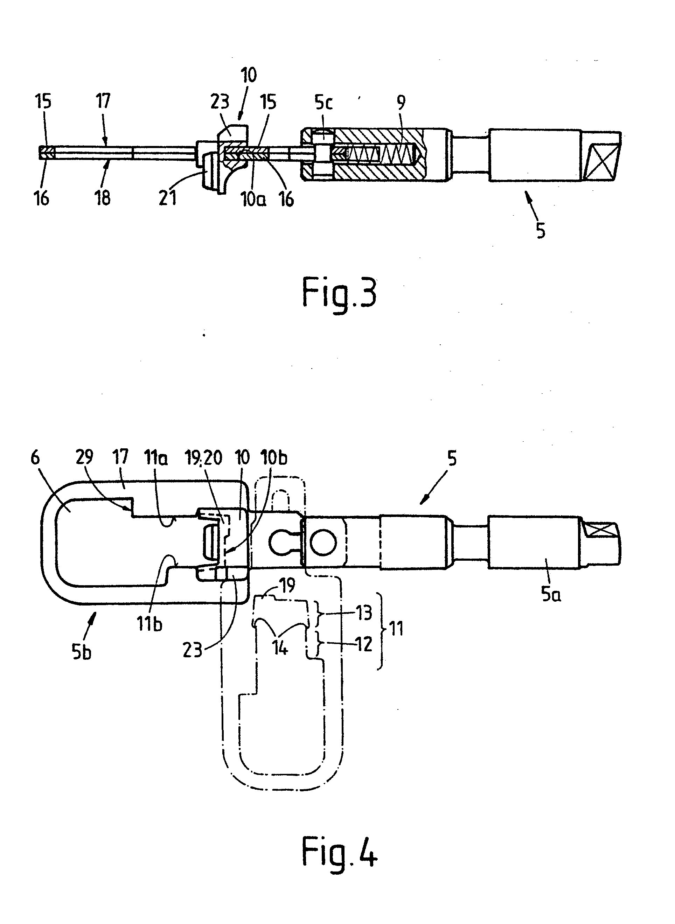

Fig. 3 einen Längsschnitt durch den Sperriegel; und

Fig. 4 eine Draufsicht auf den Sperriegel.

Der Lenkschloßkörper bzw. das Schloßaufnahmegehäuse 1 weist einen ersten Teil 1a auf, in dem der Schließzylinder 2 befestigt ist. Im Schließzylinder ist ein Zylinderkern drehbar gelagert, an dem koaxial die Schaltwalze 3 befestigt ist, die einen Steuernocken 4 trägt. Rechtwinklig zur Schließzylinderachse erstreckt sich ein Sperriegel 5, der von einem Teil 1b des Gehäuses 1 umgeben ist und der aus zwei Teilen 5a und 5b besteht. Das erste Teil 5a des Sperriegels sperrt mit seinem bolzenförmigen Ende die nicht dargestellte Lenksäule eines Kraftfahrzeugs, und das zweite Teil 5b ist rahmenförmig gestaltet und umgibt aufgrund der Öffnung 6 die Schaltwalze 3.

Der Nocken 4 der Schaltwalze 3 betätigt das zweite Sperriegelteil 5b nicht direkt, sondern über ein rahmenförmiges Sperrteil 7, das parallel zum Sperriegel verschiebbar zwischen dem Schließzylinderkern und dem Sperriegel gelagert ist. Das als Schieber wirkende Sperrteil 7 wird über einen Sperrer 8 von einem an der Schlüsseleinführung angeordneten Schiebestück so lange gehalten, bis bei Schlüsselabzug das Schiebestück vom Schlüssel freigegeben wird. Das Sperrteil weist an seiner Unterseite einen Vorsprung 8a auf, der in der Öffnung 6 des Sperriegelteils 5b einliegt und durch Betätigung des Nockens 4 den gesamten Sperriegel zurückzieht.

Die beiden Sperriegelteile 5a und 5b sind aneinander durch einen Bolzen 5c angelenkt, und das Teil 5a weist eine koaxiale Ausnehmung 5d auf, in der eine Feder 9 einliegt, die die Teile 5a und 5b voneinander wegdrückt. Eine Bewegung des Teils 5a gegenüber dem Teil 5b wird dadurch ermöglicht, daß der im Teil 5a befestigte Bolzen 5c in einer Langöffnung 5e des Teils 5b einliegt.

Das zweite Sperriegelteil 5b besteht aus zwei oder mehr rahmenförmigen Blechteilen gleicher Form und Größe, die durch ein Kunststoffteil 10 aneinandergehalten sind. Hierzu weist die Öffnung 6 einen Bereich auf, dessen Abmessungen größer sind als die Außenabmessungen des Kunststoffteils 10, und von diesem Bereich geht ein Einschiebbereich 11 aus, dessen Ränder 11a und 11b zueinander und zur Längsachse des Sperriegels 5 parallel liegen. Der zuerst vom Kunststoffteil erreichte Einführabschnitt 12 des Einschiebebereichs 11 ist in seiner Breite geringer ausgeführt als der darauffolgende Endabschnitt 13 des Einschiebebereichs, d. h. die Ränder 11a und 11b weisen einen etwas geringeren Abstand auf als die Breite des Kunststoffteils 10 an der Stelle, an der dieses an den Rändern anliegt. Hierdurch muß das Kunststoffteil 10 den Einführabschnitt 12 aufgrund seiner Elastizität überwinden, um in den darauffolgenden Endabschnitt des Einschiebebereichs einzuschnappen, der etwas breiter ausgeführt ist. Zwischen den Abschnitten 12 und 13 befinden sich Stufen 14, die verhindern, daß das Kunststoffteil 10 seine Endstellung verläßt.

Die beiden aufeinanderliegenden Blechteile 15, 16 des zweiten Sperriegelteils 5b werden im Endabschnitt des Einschiebebereichs der Öffnung 6 auf beiden äußeren Flachseiten 17, 18 von Rändern des Kunststoffteils 10 übergriffen, die auf drei Seiten des Kunststoffteils eine Nut 10a bilden. Der Boden 10b dieser Nut 10a entspricht der Form des Randes der Öffnung 6 im Bereich des Endabschnitts 13, wobei in diesem Rand eine Ausnehmung 19 außermittig der Längsachse des Sperriegels 5 angeordnet ist, in der ein entsprechend geformter Vorsprung 20 des Kunststoffteils 10 einliegt, um sicherzustellen, daß das Kunststoffteil 10 nur in einer Lage verrastet werden kann. Die Breite der Nut 10a ist gleich der Gesamtdicke der beiden aufeinandergelegten Blechteile 15, 16.

Auf der dem Schließzylinder 2 abgewandten Seite des Sperriegels ist am Kunststoffteil 10 eine Anlagefläche 21 für eine Schraubendruckfeder 22 angeformt, die den Sperriegel zur Lenksäule hin drückt. Auf der gegenüberliegenden Seite ist am Kunststoffteil 10 ein Vorsprung 23 angeformt, der einen Nocken für einen nicht dargestellten Schalter bildet, der in einem Stromkreis zur Erregung eines Summers liegt, um den Fahrer bei Öffnen der Kraftfahrzeugtür darauf aufmerksam zu machen, daß der Zündschlüssel noch nicht abgezogen ist.

Die Ausnehmung 24 im Gehäuse 1, die den Sperriegel 5 aufnimmt, ist auf der der Lenksäule gegenüberliegenden Seite durch ein Verschlußstück 25 verschlossen, das einen Teil der Gehäusewandung bildet und auf seiner Innenseite einen angeformten Vorsprung 26 aufweist, in dem eine Öffnung 27 koaxial zur Schließzylinderachse angeordnet ist. In dieser Öffnung 27 liegt die Schaltwalze 3 ein, um das Verschlußstück gegen ein Herausziehen zu halten. Auf dem Vorsprung 26 des Verschlußstücks 25 ist eine Blattfeder 28 befestigt, die in ihrer Längserstreckung quer zum Sperriegel liegt und mit ihrer Fläche parallel zu den Flachseiten 17, 18 des zweiten Sperriegelteils 5b ist. In der Schlüsselabzugsstellung wird die Blattfeder 28 durch den Steuernocken 4 derart angehoben, daß sie in die Öffnung 6 in einen Bereich hineinreicht, in dem eine Sperrfläche 29 am Sperriegelteil 5b angeordnet ist. Wird das zweite Sperriegelteil 5b durch einen Unbefugten von der Lenksäule weggezogen, so gelangt die Sperrfläche 29 zur Anlage an der Blattfeder 28 und verhindert diese Manipulation. Der Vorsprung 26 besitzt an seinem freien Ende eine Lagerstelle für das zweite Ende der Schraubendruckfeder 22.

## Patentansprüche

1. Lenkschloß für ein Kraftfahrzeug, mit einem längsverschieblichen Sperriegel (5), der einen ersten, die Lenksäule sperrenden Teil (5a) und einen zweiten, vom Schließzylinder (2) insbesondere über eine Schaltwalze betätigten Teil (5b) aufweist, wobei beide zueinander koaxial angeordnete Sperriegelteile gegeneinander begrenzt axial verschieblich sind und durch eine Feder (9) voneinander weg belastet sind, dadurch gekennzeichnet, daß das zweite Sperriegelteil (5b) aus mindestens zwei gleichen, flachen, mit ihren Flachseiten aufeinandergelegten Blechteilen (15, 16) besteht, die durch ein Kunststoffteil (10) aneinandergehalten sind.

2. Lenkschloß nach Anspruch 1, dadurch gekennzeichnet, daß der zweite Sperriegelteil (5b) und damit die Blechteile (15, 16) eine Öffnung (6) aufweisen, in die das Kunststoffteil (10) eingesetzt ist.

3. Lenkschloß nach Anspruch 2, dadurch gekennzeichnet, daß das Kunststoffteil (10) in der Öffnung (6) an deren Rand verrastet einliegt.

4. Lenkschloß nach einem der Ansprüche 1 bis 3, dadurch gekennzeichnet, daß das Kunststoffteil (10) einen Randbereich der Öffnung (6) auf beiden äußeren Flachseiten (17, 18) des zweiten Sperriegelteils (5b) übergreift.

5. Lenkschloß nach einem der Ansprüche 1 bis 4, dadurch gekennzeichnet, daß das Kunststoffteil (10) eine die Blechteile (15, 16) übergreifende Nut (10a) mit einer Innenweite aufweist, die etwa die Gesamtdicke der aufeinandergelegten Blechteile (15, 16) ist.

6. Lenkschloß nach Anspruch 5, dadurch gekennzeichnet, daß die Nut (10a) auf drei Seiten des insbesondere rechteckigen Kunststoffteils (10) umläuft.

7. Lenkschloß nach einem der Ansprüche 2 bis 6, dadurch gekennzeichnet, daß die Öffnung (6) für das Kunststoffteil (10) einen Einschiebebereich (11) bildet, dessen einander gegenüberliegenden, zueinander etwa parallelen Ränder (11a, 11b) voneinander einen Abstand haben, der etwa dem Abstand der Nutenböden (10b) zweier zueinander etwa paralleler Nutenbereiche des Kunststoffteils (10) entspricht.

8. Lenkschloß nach Anspruch 7, dadurch gekennzeichnet, daß in dem Endabschnitt (13) des Einschiebebereichs (11), in dem das Kunststoffteil (10) seine halternde Lage hat, die einander gegenüberliegenden Ränder einen Abstand aufweisen, der gleich oder etwas größer ist als der Abstand der Nutenböden (10b) voneinander, und daß in einem davor liegenden Abschnitt (Einführabschnitt (12)) des Einschiebebereichs (11) der Abstand der Ränder (11a, 11b) voneinander kleiner ist als der Abstand der Nutenböden (10b) voneinander.

9. Lenkschloß nach Anspruch 8, dadurch gekennzeichnet, daß zwischen dem Endabschnitt (13) und dem davor liegenden Abschnitt (12) mindestens einer der beiden Ränder eine Stufe (14) bildet, hinter der das Kunststoffteil (10) einrastet.

10. Lenkschloß nach einem der Ansprüche 2 bis 9, dadurch gekennzeichnet, daß der Rand der Öffnung (6) eine zur Längsachse des Sperriegels unsymmetrische Ausnehmung (19), insbesondere einen Rücksprung, aufweist, in der ein entsprechend geformter Vorsprung (20) des Kunststoffteils (10) einliegt.

11. Lenkschloß nach einem der Ansprüche 7 bis 10, dadurch gekennzeichnet, daß die Breite des Einschiebebereichs (11) geringer ist als die Breite oder der Durchmesser der übrigen Öffnung (6).

12. Lenkschloß nach einem der Ansprüche 1 bis 11, dadurch gekennzeichnet, daß das Kunststoffteil (10) und insbesondere der Einschiebebereich (11) der Öffnung (6) nahe dem ersten Teil (5a) liegen.

13. Lenkschloß nach einem der Ansprüche 1 bis 12, dadurch gekennzeichnet, daß am Kunststoffteil (10) eine Anlagefläche (21) für eine den Sperriegel beaufschlagende Feder (22) angeformt ist.

14. Lenkschloß nach einem der Ansprüche 1 bis 13, dadurch gekennzeichnet, daß am Kunststoffteil (10) ein Vorsprung (23), insbesondere ein Kurventeil oder Nocken angeformt ist, durch den ein Schalter betätigbar ist.

15. Lenkschloß nach einem der Ansprüche 2 bis 14, dadurch gekennzeichnet, daß die Öffnung (6) zusätzlich zum Kunststoffteil (10) die Schaltwalze (3) aufnimmt.

16. Lenkschloß nach einem der Ansprüche 1 bis 15, dadurch gekennzeichnet, daß die Flachseiten (17, 18) der Blechteile (15, 16) rechtwinklig zur Drehachse des Schließzylinders (2) sind.

17. Lenkschloß nach einem der Ansprüche 1 bis 16, dadurch gekennzeichnet, daß die den Sperriegel (5) aufnehmende, quer zur Schließzylinderachse liegende Gehäuseausnehmung (24) auf der der Lenksäule gegenüberliegenden Seite durch ein Verschlußstück (25), insbesondere Deckel verschlossen ist, an dessen Innenseite ein Vorsprung (26) angeformt ist, der eine Öffnung (27) aufweist, die von der mit dem Zylinderkern verbundenen Schaltwalze (3) durchdrungen ist.

18. Lenkschloß nach Anspruch 17, dadurch gekennzeichnet, daß der Vorsprung (26) eine Blattfeder (23) trägt, die durch den den Sperriegel (5) betätigenden Steuernocken (4) der Schaltwalze (3) betätigbar ist und die in der Schlüsselabzugsstellung an einer Fläche (29) des zweiten Sperriegelteils (5b) sperrend anliegt, um eine Bewegung des zweiten Sperriegelteils aus der Sperrstellung zu verhindern.

**Claims**

1. Steering lock for a motor vehicle, having a longitudinally displaceable locking bolt (5) which comprises a first part (5a) blocking the steering column and a second part (5b) actuated by the lock cylinder (2), especially through an actuating roll, the two mutually coaxially arranged locking bolt parts being limitedly axially displaceable in relation to one another and loaded away from one another by a spring (9), characterized in that the second locking bolt part (5b) consists of at least two like flat sheet metal parts (15, 16) laid with their flat sides one upon the other, which are held upon one another by a synthetic plastics part (10).

2. Steering lock according to claim 1, characterized in that the second locking bolt part (5b) and thus the sheet metal parts (15, 16) have an opening (6) into which the synthetic plastics part (10) is inserted.

3. Steering lock according to claim 2, characterized in that the synthetic plastics part (10) lies in the opening (6) with snap engagement to the edge thereof.

4. Steering lock according to one of claims 1 to 3, characterized in that the synthetic plastics part (10) grasps over a marginal zone of the opening (6) on both outer flat sides (17, 18) of the second locking bolt part (5b).

5. Steering lock according to one of claims 1 to 4, characterized in that the synthetic plastics part (10) has a groove (10a), grasping over the sheet metal parts (15, 16), with an internal width which is approximately the total thickness of the sheet metal parts (15, 16) laid upon one another.

6. Steering lock according to claim 5, characterized in that the groove (10a) extends around on three sides of the especially rectangular synthetic plastics part (10).

7. Steering lock according to one of claims 2 to 6, characterized in that the opening (6) forms for the synthetic plastics part (10) a push-in region (11) of which the mutually opposite, mutually approximately parallel edges (11a, 11b) have a spacing from one another which corresponds approximately to the distance between the groove bottoms (10b) of two mutually approximately parallel groove regions of the synthetic plastics part (10).

8. Steering lock according to claim 7, characterized in that in the end section (13) of the push-in region (11), where the synthetic plastics part (10) has its retention position, the mutually opposite marginal portions have a spacing which is equal to or somewhat greater than the distance of the groove bottoms (10b) from one another, and in that in a section lying therebefore (introduction section (12)) of the push-in region (11) the distance of the marginal portions (11a, 11b) from one another is less than the distance of the groove bottoms (10b) from one another.

9. Steering lock according to claim 8, caracterised in that between the end section (13) and the section (12) lying before it at least one of the two marginal portions forms a step in behind which the synthetic plastics part (10) snaps.

10. Steering lock according to one of claims 2 to 9, characterised in that the margin of the opening (6) comprises a removed part (19), aspecially a recess, which is asymmetrical in relation to the longitudinal axis of the locking bolt and in which there engages a correspondingly shaped projection (20) of the synthetic plastics part (10).

11. Steering lock according to one of claims 7 to 10, characterised in that the width of the push-in region (11) is less than the width or the diameter of the remaining opening (6).

12. Steering lock according to one of claims 1 to 11, characterised in that the synthetic plastics part (10) and especially the push-in region (11) of the opening (6) lie close to the first part (5a).

13. Steering lock according to one of claims 1 to 12, characterised in that an abutment face (21) for a spring (22) acting upon the locking bolt is formed on the synthetic plastics part (10).

14. Steering lock according to one of claims 1 to 13, characterised in that a projection (23), especially a cam or dog, by which a switch is actuatable, is formed on the synthetic plastics part (10).

15. Steering lock according to one of claims 2 to 14, characterised in that the opening (6) accomodates the actuating roll (3) in addition to the synthetic plastics part (10).

16. Steering lock according to one of claims 1 to 15, characterised in that the flat sides (17, 18) of the sheet metal parts (15, 16) are at right angles to the axis of rotation of the lock cylinder (2).

17. Steering lock according to one of claims 1 to 16, characterised in that the housing recess (24), which accomodates the locking bolt (5) and lies transversely of the lock cylinder axis, is closed on the side opposite to the steering column by a closure piece (25), especially a lid, on the inner side of which a projection (26) is formed which has an opening (27) which is penetrated by the actuating roll (3) connected with the cylinder core.

18. Steering lock according to claim 17, characterised in that the projection (26) carries a leaf spring (28) which is actuactable by the control dog (4) of the actuating roll (3) actuating the locking bolt (5) and lies, in den position with key withdrawn, in blocking manner on a face (29) of the second locking bolt part (5b) in order to prevent a movement of the second locking bolt part out of the locking position.

**Revendications**

1. Verrou de direction pour un véhicule automobile, avec un pêne de verrouillage (5) coulissant longitudinalement, qui présente une première pièce (5a) verrouillant l'arbre de direction et une deuxième pièce (5b) entraînée par le barillet de serrure (2) en particulier par l'intermédiaire d'une came, les deux pièces du pêne de verrouillage disposées coaxialement l'une par rapport à l'autre pouvant coulisser de manière limitée l'une par rapport à l'autre et étant écartées, l'une de l'autre par un ressort (9), caractérisé en ce que la seconde pièce (5b) du pêne de verrouillage est constituée d'au moins deux pièces de tôle (15, 16) identiques et plates qui reposent l'une sur l'autre par leurs faces planes, qui sont maintenues l'une contre l'autre par une pièce (10) en matière synthétique.

2. Verrou de direction selon la revendication 1, caractérisé en ce que la seconde pièce (5b) du pêne de verrouillage et avec elle les pièces de tôle (15, 16) présentent une ouverture (16) dans laquelle est logée la pièce (10) en matière synthétique.

3. Verrou de direction selon la revendication 2, caractérisé en ce que la pièce (10) en matière synthétique est logée à encliquetage par son bord dans l'ouverture (16).

4. Verrou de direction selon l'une des revendications 1 à 3, caractérisé en ce que la pièce (10) en matière synthétique recouvre une zone de bordure de l'ouverture (6) sur les deux faces planes extérieures (17, 18) de la seconde pièce (5b) du pêne de verrouillage.

5. Verrou de direction selon l'une des revendications 1 à 4, caractérisé en ce que la pièce (10) en matière synthétique présente une rainure (10a) recouvrant les pièces de tôle (15, 16) et ayant une largeur intérieure qui est sensiblement égale à l'épaisseur totale des pièces de tôle (15, 16) disposées l'une sur l'autre.

6. Verrou de direction selon la revendication 5, caractérisé en ce que la rainure (10a) s'étend sur trois côtés de la pièce (10) en matière synthétique sensiblement rectangulaire.

7. Verrou de direction selon l'une des revendications 2 à 6, caractérisé en ce que l'ouverture (6) forme une zone d'entrée à coulissement (11) pour la pièce (10) en matière synthétique, dont les bords (11a, 11b) disposés en face l'un de l'autre et sensiblement parallèles entre eux ont un écart qui correspond sensiblement à l'écart des fonds (10b) de rainure de deux zones de rainure sensiblement parallèles entre eux de la pièce (10) en matière synthétique.

8. Verrou de direction selon la revendication 7, caractérisé en ce que, dans la section d'extrémité (13) de la zone d'entrée à coulissement (11), dans laquelle la pièce (10) en matière synthétique a sa position d'arrêt, les bords opposés l'un à l'autre ont un écart qui est égal ou quelque peu supérieur à l'écart des fonds (10b) de rainure entre eux, et que, dans une section se trouvant auparavant (section d'introduction 12) de la zone d'entrée à coulissement (11), l'écart des bords (11a, 11b) entre eux est inférieur à l'écart des fonds de rainure (10b) entre eux.

9. Verrou de direction selon la revendication 8, caractérisé en ce que, entre la section d'extrémité (13) et la section (12) se trouvant avant, au moins un des deux bords forme un gradin (14) derrière lequel s'encliquète la pièce (10) en matière synthétique.

10. Verrou de direction selon l'une des revendications 2 à 9, caractérisé en ce que le bord de l'ouverture (6) présente un évidement (19) asymétrique par rapport à l'axe longitudinal du pêne de verrouillage, en particulier un épaulement, dans lequel est logée une saillie (20) de forme correspondante de la pièce (10) en matière synthétique.

11. Verrou de direction selon l'une des revendications 7 à 10, caractérisé en ce que la largeur de la zone d'entrée à coulissement (11) est inférieure à la largeur ou au diamètre du reste de l'ouverture (6).

12. Verrou de direction selon l'une des revendications 1 à 11, caractérisé en ce que la pièce (10) en matière synthétique et en particulier la zone d'entrée à coulissement (11) de l'ouverture (6) se trouvent au voisinage de la première pièce (5a).

13. Verrou de direction selon l'une des revendications 1 à 12, caractérisé en ce qu'une surface d'appui (21) est formée sur la pièce (10) en matière synthétique pour un ressort (22) chargeant le pêne de verrouillage.

14. Verrou de direction selon l'une des revendications 1 à 13, caractérisé en ce qu'une saillie (23), en particulier une pièce courbe ou came, est formée sur la pièce (10) en matière synthétique, par laquelle peut être actionné un commutateur.

15. Verrou de direction selon l'une des revendications 2 à 14, caractérisé en ce que l'ouverture (6) reçoit, en plus de la pièce (10) en matière synthétique, la came (3).

16. Verrou de direction selon l'une des revendications 1 à 15, caractérisé en ce que les faces planes (17, 18) des pièces de tôle (15, 16) sont orthogonale à l'axe de rotation du barillet de serrure (2).

17. Verrou de direction selon l'une des revendications 1 à 16, caractérisé en ce que l'ouverture de boîtier (24) recevant le pêne de verrouillage (5) et se trouvant oblique par rapport à l'axe du barillet de serrure est fermée du côté opposé à l'arbre de direction par une pièce der fermeture (25), en particulier en couvercle, sur la face intérieure duquel est formée une saillie (26) qui présente une ouverture (27), laquelle est traversée par la came (3) liée au barillet de serrure.

18. Verrou de direction selon la revendication 17, caractérisé en ce que la saillie (26) porte un ressort-lame (28) qui peut être actionné par la came de commande (4) de la came (3) qui actionne le êne de verrouillage (5) et qui repose à verrouillage, en position d'extraction de clé, contre une surface (29) de la seconde pièce (5b) du pêne de verrouillage, afin d'empêcher un déplacement de la seconde pièce du pêne de verrouillage en dehors de la position de verrouillage.

Fig.1

0 082 323

Fig.2

Fig.3

Fig.4